# EUROPÄISCHE PATENTANMELDUNG

(11) **EP 1 248 060 A1**
(43) Veröffentlichungstag der Anmeldung: **09.10.2002**
(21) Anmeldenummer: 01810344.0
(22) Anmeldetag: 06.04.2001
(51) Int. Cl.: F26B 21/14

(54) **Vorrichtung zum Trocknen von Feststoffisolationen eines elektrischen Gerätes**

(71) Anmelder: MICAFIL AG, 8048 Zürich (CH)
(72) Erfinder: Gmeiner, Paul, 8966 Oberwil-Lieli (CH); Keller, Peter, 8032 Zürich (CH)
(74) Vertreter: ABB Patent Attorneys

(57) **Zusammenfassung**

Die Vorrichtung dient dem Trocknen von Feststoffisolationen eines elektrischen Gerätes (40) durch die vom Dampf eines Solvents abgegebene Kondensationswärme. Sie weist einen die Feststoffisolationen aufnehmenden evakuierbaren Autoklaven (10) auf sowie einen Solventdampf erzeugenden Verdampfer (20), einen mit dem Autoklaven (10) verbundenen evakuierbaren Kondensator (50) zum Kondensieren eines aus dem Autoklaven (10) geführten Solvent und Wasser enthaltenden Dampfgemisches, und einen Wärmerekuperator (30). Im Wärmerekuperator (30) wirkt das Solvent als wärmeaufnehmendes Medium und das Dampfgemisch als wärmeabgebendes Medium.

Um den Energiebedarf dieser Vorrichtung klein zu halten, ist im Autoklaven (10) ein der wärmeabgebenden Wirkung des Dampfgemischs ausgesetzter Wärmerekuperator (30) angeordnet. Zum Verdampfer (20) geführtes Solvent kann so besonders wirksam Wärme aus dem Trocknungsprozess aufnehmen. Zugleich werden durch Reduktion der Wärme des aus dem Autoklaven (10) geführten Dampfgemischs an den Kondensator (50) und eine Verbindungsleitung (51) zwischen dem Autoklaven (10) und dem Kondensator (50) nur geringe Anforderungen gestellt. Die Trocknungsvorrichtung kann daher zugleich auch kostengünstig gefertigt werden.

## Beschreibung

### TECHNISCHES GEBIET

Bei der Erfindung wird ausgegangen von einer Vorrichtung zum Trocknen der Feststoffisolationen eines elektrischen Gerätes nach dem Oberbegriff von Patentanspruch 1.

Beim Betrieb dieser Vorrichtung wird die Kondensationswärme eines in einem Verdampfer erzeugten Solventdampfs zum raschen und schonenden Aufheizen der Feststoffisolationen des in einem auf Unterdruck gehaltenen Autoklaven befindlichen elektrischen Gerätes ausgenutzt. Beim Aufheizen aus den Feststoffisolationen tretendes Wasser wird in einem Solvent-Wasser-Dampfgemisch einer Kondensations- und Trennvorrichtung zugeführt, in der das Dampfgemisch kondensiert und aus dem hierbei gebildeten Solvent-Wasser-Kondensat Wasser ausgeschieden wird.

Gegebenenfalls in den Feststoffisolationen vorhandenes Isolieröl wird durch das kondensierte Solvent aus den Feststoffisolationen herausgelöst. Die hierbei gebildete Solvent-lsolieröl-Lösung wird am Boden des Autoklaven gesammelt. Durch nachfolgende Destillation wird das Solvent aus dieser Lösung entfernt und das zurückbleibende Isolieröl aus der Vorrichtung entfernt.

### STAND DER TECHNIK

Eine Vorrichtung der eingangs genannten Art ist von P. K. Gmeiner in der Firmenschrift der Fa. Micafil Vakuumtechnik AG, Zürich, MTV/E 02923000/22 "Modern vapour drying processes and plants", insbesondere S.11, Diagramm S4, beschrieben. Diese Vorrichtung weist einen Wärmerekuperator auf, in dem beim Aufheizen von Feststoffisolationen gebildetes Solvent-Wasser-Dampfgemisch Wärme abgibt und zwar an Solvent, welches einem Verdampfer der Anlage zugeführt wird. Die vom Solvent aufgenommene Wärme verringert den Energiebedarf des Verdampfers wesentlich. Für das Kondensieren des vorgekühlten Dampfgemischs in einem Kondensator der Anlage wird nur eine vergleichsweise geringe Menge an Kühlwasser benötigt. Daher weist diese Vorrichtung einen energietechnisch guten Wirkungsgrad auf.

### KURZE DARSTELLUNG DER ERFINDUNG

Der Erfindung, wie sie in den Patentansprüchen angegeben ist, liegt die Aufgabe zugrunde, den Energiebedarf der eingangs genannten Vorrichtung mit einfachen Mitteln zu reduzieren.

Bei der erfindungsgemässen Vorrichtung ist im Autoklaven eine der wärmeabgebenden Wirkung des Dampfgemischs ausgesetzte erste Stufe eines Wärmerekuperators angeordnet. Während des Aufheizens der Feststoffisolationen durch diese Stufe des Wärmerekuperators zum Verdampfer geführtes Solvent kann nun besonders wirksam vorgewärmt werden, da das Solvent-Dampf-Gemisch erst nach Abgabe von Wärme an das Solvent aus dem Autoklaven geführt wird. Durch diese Massnahme wird der Energiebedarf der Vorrichtung ganz erheblich reduziert.

Energietechnisch besonders vorteilhaft ist es, der ersten Stufe des Wärmerekuperators Solvent zuzuführen, welches aus dem im Trocknungsprozess anfallenden Solvent-Wasser-Kondensat ausgeschieden wurde, da dann wegen der relativ hohen Temperaturdifferenzen von Solvent und Dampfgemisch der Wirkungsgrad des Wärmerekuperators besonders hoch ist.

Da im Wärmerekuperator die Temperatur des Solvent-Wasser-Dampfgemischs erheblich reduziert und das Dampfgemisch teilweise kondensiert wird, kann eine zwischen dem Autoklaven und einem das Solvent-Wasser-Kondensat erzeugendem Kondensator vorgesehene Verbindungsleitung für das Dampfgemisch besonders kostengünstig ausgeführt werden. Da die Temperatur und die Menge des Dampfgemischs bereits im Autoklaven wesentlich reduziert werden, können die Verbindungsleitung und der Kondensator klein bemessen sein. Der Kondensator kann dann sogar ohne zusätzliche Montagemittel direkt am Autoklaven angesetzt werden. Zudem entfallen eine Rückführleitung und Ventile für im Wärmerekuperator aus dem Dampfgemisch gegebenenfalls gebildetes Kondensat, da ein solches Kondensat aus dem Wärmerekuperator direkt in den Autoklaven abfliessen kann. Wegen der niedrigen Temperatur des aus dem Autoklaven tretenden Dampfgemischs benötigt der Kondensator dementsprechend auch nur eine geringe Menge an Kühlwasser.

Es empfiehlt sich, den Verdampfer im Autoklaven anzuordnen. Zum einen kann dann das im Wärmerekuperator vorgewärmte Solvent in einer einfachen Leitung und ohne die Verwendung von Ventilen zum Verdampfer geführt werden. Zum anderen werden keine vakuumfeste Leitung und keine vakuumfeste Autoklaven-Wanddurchführung für diese Leitung benötigt.

Bei einer konstruktiv einfachen Ausführungsform der Vorrichtung nach der Erfindung wird das aus dem kondensierten Dampfgemisch getrennte Solvent in einer Rohrleitung durch die Autoklavenwand ins Innere des Autoklaven geführt, und weist der Wärmerekuperator zusätzlich ein Leitelement auf zur Führung des Dampfgemischs an einen im Autoklaven befindlichen Abschnitt dieser Rohrleitung.

Eine für einen hohen Wirkungsgrad des Wärmerekuperators und damit auch der erfindungsgemässen Vorrichtung vorteilhafte Strömungswirkung wird erreicht, wenn das Leitelement als Wand ausgeführt ist und diese Wand und der Teil der Autoklavenwand, durch den die Rohrleitung geführt ist, vorwiegend parallel zueinander verlaufende und überwiegend vertikal erstreckte Wandabschnitte aufweisen. Hierbei ist es aus strömungstechnischen Gründen günstig, dass Leitelement vom Boden zur Decke des Autoklaven zu führen und mindestens eine im Bereich des Bodens oder der Decke vorgesehene Öffnung für den Eintritt des Dampfgemischs ins Innere des Wärmerekuperators vorzusehen. Die Öffnung sollte vorzugsweise schlitzförmig ausgebildet sein und sich längs einer Wand des Autoklaven erstrecken. Das Dampfgemisch weist dann über die ganze Breite oder Länge des Autoklaven ein homogenes Strömungsverhalten auf. Im Wärmerekuperator wird dann zudem besonders viel Wärme ausgetauscht.

Die Vorrichtung nach der Erfindung zeichnet sich durch einen besonders geringen Energiebedarf aus, wenn im Autoklaven eine der wärmeabgebenden Wirkung des Dampfgemischs ausgesetzte zweite Stufe des Wärmerekuperators angeordnet ist, welcher als wärmeaufnehmendes Medium ein beim Trocknen der Feststoffisolationen anfallendes und gegebenenfalls Öl enthaltendes Solventkondensat zuführbar ist. Aus Gründen einer einfachen Ausgestaltung der Anlage sollte diesem Kondensat das in der ersten Stufe vorgewärmte Solvent zugeführt werden. In einer fertigungstechnisch einfach zu realisierenden Ausführungsform wird das Kondensat in einer Rohrleitung durch die Autoklavenwand ins Innere des Autoklaven geführt, und weist der Wärmerekuperator ein Leitelement auf, welches das Dampfgemisch an eine Wärmeaustauschstrecke des Wärmerekuperator leitet, in der das ins Autoklaveninnere geführte Kondensat als wärmeaufnehmendes Medium wirkt.

Weist die Trocknungvorrichtung zusätzlich Mittel auf zur indirekten Regelung des aus dem Autoklaven geführten Dampfgemischs, so kann zusätzlich Prozessenergie eingespart werden. Ein vergleichsweise teures Regelventil zwischen dem Autoklaven und dem Kondensator kann dann entfallen.

Eine besonders präzise indirekte Regelung wird hierbei erreicht, wenn die Mittel Vorrichtungen zum Messen der pro Zeiteinheit im kondensierten Dampfgemisch anfallenden Mengen an Wasser und Solvent umfassen sowie Vorrichtungen zur Bildung einer Solvent-Sollwertkurve aus den gemessenen Werten der pro Zeiteinheit anfallenden Wassermenge und einem empirisch vorbestimmten Bewertungsfaktor und zur Bildung eines Steuersignals für ein Element zum Regeln des Durchsatzes des aus dem Autoklaven tretenden Dampfgemisches.

Eine für viele Anwendungen ausreichend gute Regelung ist möglich, wenn die Mittel Vorrichtungen umfassen zum Messen der pro Zeiteinheit anfallenden Menge an Solvent und des Partialdrucks des Wasserdampfs im Autoklaven sowie Vorrichtungen zur Bildung einer Solvent-Sollwertkurve aus den gemessenen Werten des Partialdrucks des Wasserdampfs und dem empirisch vorbestimmten Bewertungsfaktor und zur Bildung eines Steuersignals für ein Element zum Regeln des Durchsatzes des aus dem Autoklaven tretenden Dampfgemisches.

Als Regelelemente bewährt haben sich in einer den Kondensator mit einer Vakuumanlage verbindenden und Inertgas führenden Leitung und/oder in einem Kühlwasserrücklauf des Kondensators angeordnete Regelventile und/oder ein Einlassventil für von aussen zuführbares Inertgas.

### KURZE BESCHREIBUNG DER ZEICHNUNGEN

In den Zeichnungen ist ein Ausführungsbeispiel der Erfindung vereinfacht dargestellt, und zwar zeigt:
- Fig.1: ein Prinzipschema einer Ausführungsform der Trocknungsvorrichtung nach der Erfindung mit einem zu trocknende Feststoffisolationen aufnehmenden Autoklaven, aus dem beim Aufheizen der Feststoffisolationen ein SolventWasser-Dampfgemisch ausgeleitet wird, und
- Fig.2: ein Diagramm, in dem in Funktion der Zeit der Verlauf einiger für den Betrieb der Vorrichtung nach Fig.1 typischer Parameter dargestellt ist.

### WEGE ZUR AUSFÜHRUNG DER ERFINDUNG

Bei der in der Figur dargestellten Trocknungsvorrichtung bezeichnet 10 einen heiz- und evakuierbaren Autoklaven, in dem ein Verdampfer 20 für ein Solvent und ein Wärmerekuperator 30 angeordnet sind. Im Autoklav 10 befindet sich ferner ein zu trocknendes Objekt, beispielsweise ein hygroskopische Feststoffisolationen aufweisendes elektrisches Gerät 40, etwa ein Transformator. Der Wärmerekuperator ist über eine Rohrleitung 51 mit einem Kondensator 50 verbunden. Über eine Rohrleitung 81 ist er mit einer Solvent aus einem Trenngefäss 70 abführenden Solvent-Förderpumpe 80 verbindbar.

Der Wärmerekuperator 30 ist vertikal ausgerichtet und weist eine vorwiegend parallel zu einer Autoklaven-Seitenwand 11 erstreckte und als Leitelement wirkende Begrenzungswand 31 auf. Diese Wand begrenzt zusammen mit der Autoklaven-Seitenwand 11 einen schachtartig ausgeführten Raum 32, der über eine im Bereich des Autoklavenbodens 1 befindliche Öffnung 33 mit dem den Verdampfer 20 enthaltenden Innenraum des Autoklaven verbunden ist. Die Öffnung 33 ist schlitzförmig ausgebildet und erstreckt sich vorwiegend horizontal über die durch die Seitenwand 11 bestimmte Tiefe des Autoklaven 10. An seinem oberen Ende mündet der Raum 32 in die Rohrleitung 51, die vakuumfest durch die Autoklaven-Seitenwand 11 nach aussen geführt ist. Der Raum 32 ist in zwei vertikal übereinander angeordnete und jeweils eine Wärmeaustauschstrecke 34 bzw. 35 für ein wärmeaufnehmendes Medium enthaltende Teilräume unterteilt. Der die Strecke 34 enthaltende Teilraum ist einer ersten Stufe 36 und der die Strecke 35 enthaltende Teilraum einer zweiten Stufe 37 des Wärmerekuperators zugeordnet. Das untere Ende der Strecke 34 bzw. 35 wirkt mit der vakuumfest durch die Wand 11 geführten Rohrleitung 81 bzw. einer ebenfalls vakuumfest durch die Wand 11 geführten Rohrleitung 12 zusammen, wohingegen das obere Ende der Strecke 34 in das in den Raum 32 geführte Ende der Rohrleitung 12 und das obere Ende der Strecke 35 in eine zum Verdampfer 20 führende Rohrleitung 21 einmündet. Die Strecken 34 und 35 können beispielsweise als Rohrabschnitte ausgeführt sein. Die Rohrleitung 21 kann - wie gestrichelt angegeben ist - gegebenenfalls vakuumfest durch die Autoklavenwand zu einem externen Verdampfer 22 geführt sein. Dieser externe Verdampfer ist über ein Ventil 23 mit dem Autoklaven 10 verbindbar.

Der Kondensator 50 ist mit dem Trenngefäss 70 über ein Durchflussmessgerät 54 verbunden. Über ein Ventil 53 ist der Kondensator 50 ferner mit einer Vakuumanlage 60 verbindbar. Der Kondensator 50 kann ferner über ein Inertgasregelventil 61 mit der Vakuumanlage 60 verbunden werden. In dieser Verbindung befindet sich zwischen einem Abgang vom Kondensator 50 - bzw. einem Abgang von der Verbindung zwischen Kondensator 50 und Trenngefäss 70 - und dem Regelventil 61 ein mit einer Inertgasquelle, wie insbesondere Luft oder Stickstoff, verbundenes Einlassventil 62. In einer Kühlwasserzufuhr des Kondensators 50 ist ein Kühlwasserregelventil 52 angeordnet.

Die Ausgangssignale des Durchflussmessgerätes 54 und eines am Trenngefäss 70 vorgesehenen Niveausensors 71 werden einer Steuer- und Regelvorrichtung 90 zugeführt. Die Steuer- und Regelvorrichtung verarbeitet diese Signale und bildet Steuersignale für die Ventile 52, 61 und 62.

Im Trenngefäss 70 ist ein Auslauf vorgesehen, welcher über die Förderpumpe 80 mit einem Solvent-Vorratsgefäss 82 oder wahlweise mit der Rohrleitung 81 verbindbar ist. Die Verbindung zum Solvent-Vorratsgefäss 82 kann über ein Ventil 83 und diejenige zur Rohrleitung 81 über ein Ventil 84 hergestellt werden. Der Pumpe 80 ist ein Durchflussmessgerät 85 nachgeschaltet, dessen Messsignale der Steuer- und Regelvorrichtung 90 zugeführt werden.

Im Boden des Autoklaven 10 ist ein Abfluss vorgesehen, welcher über eine Förderpumpe 86 und ein Ventil 87 entweder mit der Rohrleitung 12 oder über die Förderpumpe 86 und ein Ventil 88 mit einem Vorratsbehälter für Isolieröl, welches beim Kondensieren des Solvents aus den Feststoffisolationen herausgewaschen wird, verbindbar ist.

Am Autoklaven ist ferner ein Druckmessgerät 13 angebracht, welches den Partialdruck vom im Autoklaven befindlichen Wasserdampf ermitteln kann und entsprechende Signale an die Steuer- und Regelvorrichtung weiterleitet. 55 bezeichnet einen Temperatursensor, welcher die Temperatur des vom Kondensator 50 abgeführten Kühlwassers erfasst.

Die Wirkungsweise dieser Vorrichtung ist wie folgt:
Zum Trocknen der Feststoffisolationen des elektrischen Geräts 40 wird der mit den Feststoffisolationen beladene Autoklav 10 zunächst mit der Vakuumanlege 60 evakuiert. Bei geschlossenem Ventil 53 erzeugt der Verdampfer 12 und/oder der Verdampfer 22 Solventdampf, welcher an den Feststoffisolationen kondensiert und diese dadurch aufheizt. Zugleich löst das kondensierte Solvent gegebenenfalls in den Feststoffisolationen vorhandenes Isolieröl oder andere Verunreinigungen. Das gegebenenfalls Öl enthaltende Solvent-Kondensat sammelt sich am Boden des evakuierten Autoklaven und wird von der Förderpumpe 86 bei geschlossenem Ventil 88 über das geöffnete Ventil 87 und die Rohrleitung 12 in die Wärmeaustauschstrecke 35 gepumpt. Durch das Aufheizen der Feststoffisolationen 40 treten Wasserdampf und gegebenenfalls in den Feststoffisolationen vorhandene Inertgase in den Autoklaven und bilden mit dem Solventdampf ein Solvent-Wasser-Dampfgemisch, in dem auch die gegebenenfalls vorhandenen Inertgase enthalten sind. Dieses Dampfgemisch gelangt durch die Öffnung 33 in den die Wärmeaustauschstrecken 34 und 35 des Wärmerekuperators 30 enthaltenden Raum 32 und wird dort über die Wärmeaustauschstrecken nach oben geführt und schliesslich über die Rohrleitung 51 in den Kondensator 50 gesaugt, in dem es als Solvent-Wasser-Kondensat abgeschieden wird. Die gegebenenfalls mit abgesaugten Inertgase werden über den Kondensator 50 und das Regelventil 61 in die Vakuumanlage 60 geführt. Da sich die Öffnung 33 über die ganze Tiefe des Autoklaven 10 in dessen Inneren erstreckt, tritt das Dampfgemisch nicht punktförmig sondern linienförmig in den Wärmerekuperator 30 ein. Hierdurch wird eine homogene, grossflächige Strömung und dadurch ein sehr guter Wärmeaustausch ermöglicht.

Aus dem Kondensat werden nachfolgend im Trenngefäss 70 Solvent und Wasser gewonnen. Das so gewonnene Solvent wird bei geschlossenem Ventil 83 über die Solvent-Förderpumpe 80, das geöffnete Ventil 84 und die Rohrleitung 81 in die in der ersten Stufe 36 des Wärmerekuperators 30 vorgesehene Wärmeaustauschstrecke 34 befördert, in der es Wärme aus dem als wärmeabgebenden Medium wirkenden Solvent-Wasser-Dampfgemisch aufnimmt. Das solchermassen vorgewärmte Solvent wird über die zweite Stufe 37 des Wärmerekuperators oder aber auch direkt dem Verdampfer 20 zugeführt. Dadurch, dass der Wärmerekuperator 30 im Autoklaven angeordnet ist, geht besonders wenig Prozesswärme verloren und kann dementsprechend der Kondensator 50 klein dimensioniert werden. Zugleich muss dem Verdampfer 20 praktisch nur die zum Aufheizen der Feststoffisolationen notwendige Energie zugeführt werden.

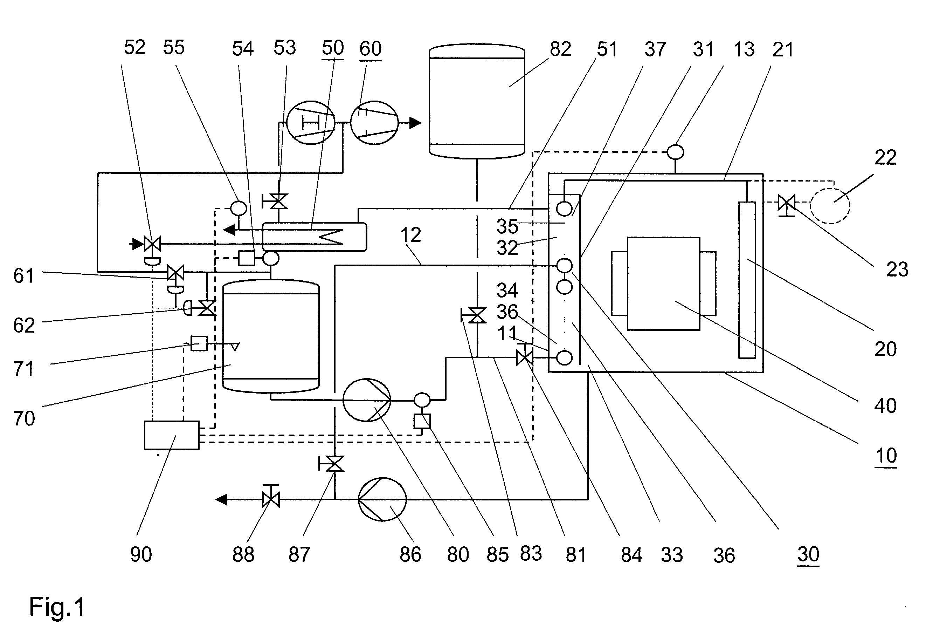

Der Wirkungsgrad des Trocknungsprozesses ist besonders hoch, wenn das sich am Boden des Autoklaven 10 sammelnde Kondensat bei geschlossenem Ventil 88 mittels der Förderpumpe 86 über das geöffnete Ventil 87 und die Rohrleitung 12 in die zweite Stufe 37 des Wärmerekuperators befördert wird und in der Wärmeaustauschstrecke 35 Wärme aus dem Dampfgemisch aufnimmt. Wird wie in der Fig.1 dargestellt ist, dieses Kondensat zusammen mit dem in der ersten Stufe 36 vorgewärmten Solvent in die zweite Stufe 37 gebracht, so kann besonders viel Prozesswärme aus dem Dampfgemisch gewonnen werden. Das in der zweiten Stufe 37 erwärmte Kondensat und/oder das aus der erstenStufe zugeführte, zusätzlich erwärmte Solvent werden dem Verdampfer 20 und/oder dem Verdampfer 22 zugeführt, wo sie unter geringer Energieaufnahme verdampft werden.

Von grossem Vorteil ist es hierbei, dass durch Einbau des Wärmerekuperators in den Autoklaven 10 Rückführleitungen und Ventile für im Wärmerekuperator 30 durch Kondensieren von Solvent-Wasser-Dampfgemisch gebildetes Solvent entfallen, da das im Wärmerekuperator 30 kondensierte Solvent direkt in den Autoklaven 10 abfliesst. Da der Verdampfer 20 und der Wärmerekuperator 30 im Autoklaven liegen, kann die Solventzuführungsleitung 21 einfach, d. h. insbesondere ohne Ventile und ohne Vakuumdurchführungen, ausgebildet sein. Darüber hinaus braucht der Wärmerekuperator 30 weder vakuumdicht noch thermisch isoliert ausgeführt zu sein. Aus den vorgenannten Gründen kann der Wärmerekuperator 30 einfach aufgebaut sein und kann an leicht zugänglichen Stellen im Autoklaven installiert werden. Er lässt sich dann einfach reinigen.

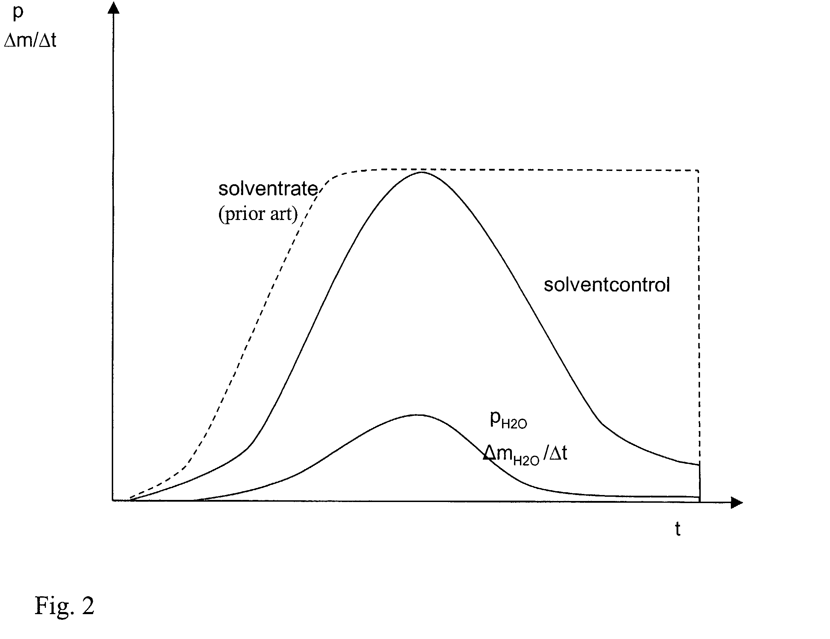

Während der Aufheizphase des Trocknungsverfahrens kann zusätzlich Prozessenergie eingespart werden, wenn die Rückführrate des aus dem Autoklaven 10 ausgeleiteten Dampfgemischs wie folgt geregelt wird:
Mit dem Niveausensor 71 oder einem das Auslaufen von Wasser aus dem Trenngefäss ermittelnden Durchlaufmesser (nicht dargestellt) wird die pro Zeiteinheit Δt, beispielsweise alle 10 Minuten, im Trocknungsprozess anfallende Menge Δm_{H2O}, beispielsweise in kg, an Wasser ermittelt. Ein dieser zeitlichen Mengenänderung Δm_{H20}/Δt proportionales Signal wird der Steuer- und Regelvorrichtung 90 zugeführt. Der zeitliche Verlauf dieses Signals während der Aufheizphase, d.h. die in diesem Zeitraum pro Zeiteinheit fortlaufend aus dem Autoklaven entfernte Wassermenge, ist in Fig. 2 dargestellt.

In der Steuer- und Regelvorrichtung 90 wird dieses Signal mit einem vorbestimmten Bewertungsfaktor gewichtet, welcher die zum Entfernen einer Mengeneinheit Wasser aus den Feststoffisolationen 40 benötigten Mengeneinheiten an Solvent beschreibt. Der Bewertungsfaktor ist unter anderem abhängig von der Menge der Feststoffisolationen und den physikalischen Eigenschaften des Solvents und kann empirisch, etwa durch Versuchstrocknungen, ermittelt werden. Der Bewertungsfaktor liegt während der Aufheizphase typischerweise zwischen 4 und 10. Es ergibt sich so eine in Fig.2 dargestellte Solvent-Sollwertkurve solventcontrol. Diese Solvent-Sollwertkurve zeigt den gewünschten Wert der pro Zeiteinheit während der Aufheizphase rücklaufenden Menge an Solvent an.

Alternativ oder zusätzlich kann diese Solvent-Sollwertkurve auch durch Messung des im Autoklaven 10 herrschenden Partialdrucks p_{H20} des Wasserdampfs mit Hilfe des Druckmessgeräts 13 ermittelt werden. Ein dem Wasserdampf-Partialdruck p_{H20} proportionales Signal wird in der Steuer- und Regelvorrichtung ebenfalls mit dem vorbestimmten Bewertungsfaktor gewichtet. Es ergibt sich so ebenfalls die in Fig.2 dargestellte Solvent-Sollwertkurve solventcontrol.

Mit Hilfe des Durchflussmessers 85 wird die rücklaufende Menge Solvent direkt gemessen oder aber indirekt ermittelt über eine Durchflussmessung des in das Trenngefäss 70 geführten Kondensats mit Hilfe des Durchflussmessers 61. Der gemessene oder indirekt ermittelte Istwert wird mit dem sich aus der Solvent-Sollwertkurve ergebenden, entsprechenden Sollwert verglichen. Weicht der Istwer zu stark vom Sollwert ab, so gibt die Steuer- und Regelvorrichtung 90 einen Befeh an ein Regelelement ab, welches die Menge des aus dem Autoklaven 10 in den Kondensator 50 geführten Dampfgemischs derart regelt, dass sich die rücklaufende Solventmenge an die Solvent-Sollwertkurve anpasst. Die Menge des aus dem Autoklaven 10 tretenden Dampfgemischs wurde bisher so geregelt wurde, dass die im Kondensator 40 pro Zeiteinheit anfallende Kondensatmenge nach dem Durchlaufen einer Anfangsphase konstant gehalten wurde. Der entsprechende zeitliche Verlauf des anfallenden Solvents ist in Fig. 2 gestrichelt eingezeichnet (Solvent-Rücklaufkurve solventrate prior art).

Die Flächen unter der Solvent-Sollwertkurve solventcontrol und der gestrichelt dargestellten Solvent-Rücklaufkurve solventrate nach dem Stand der Technik sind ein Mass für die im Kondensator 50 vernichtete Energie beim Verfahren nach der Erfindung bzw. beim Verfahren nach dem Stand der Technik. Die durch die Differenz der Flächeninhalte beider Kurven festgelegte Energiemenge wird im erfindungsgemässen Verfahren eingespart.

Zur Regelung des Solventrücklaufs ist vorzugsweise das in der Verbindungsleitung vom Kondensator 50 zur Vakuumanlage 60 enthaltene Inertgasregelventil 61 vorgesehen. Dieses Regelventil bestimmt durch Veränderung des Inertgasdruckes den Kondensatanfall im Kondensator 50 und damit die pro Zeiteinheit rücklaufende Menge an Solvent. Ein sonst übliches Regelventil in der Rohrleitung 51 zwischen Autoklav 10 und Kondensator 50 kann so entfallen. Falls zu wenig Inertgas im Autoklaven 10 oder durch Leckverluste anfällt, kann über das Einlassventil 62 zusätzlich etwas Inertgas in den Kondensator 50 eingelassen und so der Kondensatanfall gedrosselt werden.

Eine weitere vorteilhafte, da indirekte, Regelung des Solventrücklaufs wird erreicht durch Regelung des Kühlwassers des Kondensators 50. Zu diesem Zweck wird die Temperatur des Kühlwassers mit dem Temperatursensor 55 im Kühlwasserrücklauf gemessen, die gemessene Temperatur von der Steuer- und Regelvorrichtung 90 überwacht und beim Überschreiten eines Grenzwertes ein Steuerbefehl an das Kühlwasserregelventil 61 abgeben, mit dem der Vorlauf des Kühlwassers verändert wird. Hierdurch werden der Kondensatanfall im Kondensator 50 und auch damit die pro Zeiteinheit rücklaufende Menge an Solvent geregelt. Auch bei dieser Regelung ist ein Dampfregelventil zwischen Autoklav und Kondensator entbehrlich. Durch Kombination der Kühlwasserregelung mit der Inertgasregelung wird eine besonders hohe Redundanz des Verfahrens erreicht.

### Bezugszeichnungsliste

- 10: Autoklav
- 11: Autoklavenwand
- 12: Rohrleitung
- 13: Partialdruckmessgerät
- 20: Verdampfer
- 21: Rohrleitung
- 22: Verdampfer
- 23: Ventil
- 30: Wärmerekuperator
- 31: Begrenzungswand
- 32: Raum
- 33: Öffnung
- 34, 35: Wärmeaustauschstrecken
- 36, 37: Stufen
- 40: elektrisches Gerät mit Feststoffisolationen
- 50: Kondensator
- 51: Rohrleitung
- 52: Kühlwasserregelventil
- 53: Ventil

- 54: Durchflussmessgerät
- 55: Temperatursensor
- 60: Vakuumanlage
- 61: Regelventil
- 62: Inertgas-Einlassventil
- 70: Trenngefäss
- 71: Niveausensor
- 80: Solventpumpe
- 81: Rohrleitung
- 82: Solventvorratsgefäss
- 83, 84: Ventile
- 85: Durchflussmesser
- 86: Förderpumpe
- 87, 88: Ventile
- 90: Steuer- und Regelvorrichtung
- Δm_{H2O}/Δt: pro Zeiteinheit anfallende Menge an Wasser
- p_{H20}: Wasserdampf-Partialdruck im Autoklaven

## Patentansprüche

1. Vorrichtung zum Trocknen von Feststoffisolationen eines elektrischen Gerätes (40) durch die vom Dampf eines Solvents abgegebene Kondensationswärme mit
- einem die Feststoffisolationen aufnehmenden evakuierbaren Autoklaven (10),
- einem Solventdampf erzeugenden Verdampfer (20, 22),
- einem mit dem Autoklaven verbundenen evakuierbaren Kondensator (50) zum Kondensieren eines aus dem Autoklaven geführten Solvent und Wasser enthaltenden Dampfgemisches, und
- einem Wärmerekuperator (30), bei dem dem Verdampfer (20, 22) zugeführtes Solvent als wärmeaufnehmendes und Dampfgemisch als wärmeabgebendes Medium wirken,
**dadurch gekennzeichnet, dass** im Autoklaven (10) eine der wärmeabgebenden Wirkung des Dampfgemischs ausgesetzte erste Stufe (36) des Wärmerekuperators angeordnet ist.

2. Vorrichtung nach Anspruch 1, **dadurch gekennzeichnet, dass** der Verdampfer (20) im Autoklaven (10) angeordnet ist.

3. Vorrichtung nach einem der Ansprüche 1 oder 2, **dadurch gekennzeichnet, dass** aus dem kondensierten Dampfgemisch getrenntes Solvent in einer ersten Rohrleitung (81) durch die Autoklavenwand (11) ins Innere des Autoklaven (10) führbar ist, und dass der Wärmerekuperator (30) mindestens ein Leitelement (31) aufweist zur Führung des Dampfgemischs an eine im Autoklaven befindliche Wärmeaustauschstrecke (34) der ersten Stufe (36).

4. Vorrichtung nach Anspruch 3, **dadurch gekennzeichnet, dass** das Leitelement (31) und der Teil der Autoklavenwand (11), durch den die erste Rohrleitung (81) geführt ist, vorwiegend parallel zueinander verlaufende und überwiegend vertikal erstreckte Wandabschnitte aufweisen.

5. Vorrichtung nach Anspruch 4, **dadurch gekennzeichnet, dass** das Leitelement (31) vom Boden zur Decke des Autoklaven (10) geführt ist und mindestens eine im Bereich des Bodens oder der Decke vorgesehene Öffnung (33) für den Eintritt des Dampfgemischs ins Innere des Wärmerekuperators (30) aufweist.

6. Vorrichtung nach Anspruch 5, **dadurch gekennzeichnet, dass** die Öffnung (33) schlitzförmig ausgebildet ist und sich über eine Wand (11) des Autoklaven erstreckt.

7. Vorrichtung nach einem der Ansprüche 1 bis 6, **dadurch gekennzeichnet, dass** im Autoklaven (10) eine der wärmeabgebenden Wirkung des Dampfgemischs ausgesetzte zweite Stufe (37) des Wärmerekuperators (30) angeordnet ist, und dass der zweiten Stufe (37) als wärmeaufnehmendes Medium ein beim Trocknen der Feststoffisolationen anfallendes und gegebenenfalls Öl enthaltendes Solvent-Kondensat zuführbar ist.

8. Vorrichtung nach Anspruch 7, **dadurch gekennzeichnet, dass** der zweiten Stufe (37) zusätzlich das in der ersten Stufe (36) vorgewärmte Solvent zuführbar ist.

9. Vorrichtung nach einem der Ansprüche 7 oder 8, **dadurch gekennzeichnet, dass** das Solvent-Kondensat in einer zweiten Rohrleitung (12) durch die Autoklavenwand (11) ins Innere des Autoklaven (10) führbar ist, und dass der Wärmerekuperator (30) mindestens ein Leitelement (31) aufweist zur Führung des Dampfgemisch an eine im Autoklaven befindliche Wärmeaustauschstrecke (35) der zweiten Stufe.

10. Vorrichtung nach einem der Ansprüche 1 bis 9, **dadurch gekennzeichnet, dass** zusätzlich Mittel (13, 54, 71) vorgesehen sind zur indirekten Regelung des aus dem Autoklaven (10) geführten Dampfgemischs.

11. Vorrichtung nach Anspruch 10, **dadurch gekennzeichnet, dass** die Mittel Vorrichtungen (54, 71) umfassen zum Messen der pro Zeiteinheit im kondensierten Dampfgemisch anfallenden Mengen an Wasser (Δm_{H2O}/Δt) und Solvent sowie Vorrichtungen (90) zur Bildung einer Solvent-Sollwertkurve (solventcontrol) aus den gemessenen Werten der pro Zeiteinheit anfallenden Wassermenge und einem empirisch vorbestimmten Bewertungsfaktor und zur Bildung eines Steuersignals für ein Element (52, 61, 62) zum Regeln des Durchsatzes des aus dem Autoklaven tretenden Dampfgemisches.

12. Vorrichtung nach Anspruch 10 oder 11, **dadurch gekennzeichnet, dass** die Mittel Vorrichtungen (13, 54) umfassen zum Messen der pro Zeiteinheit anfallenden Menge an Solvent und des Partialdrucks des Wasserdampfs (p_{H2O}) im Autoklaven (10) sowie Vorrichtungen (90) zur Bildung einer Solvent-Sollwertkurve (solventcontrol) aus den gemessenen Werten des Partialdrucks des Wasserdampfs und einem empirisch vorbestimmten Bewertungsfaktor und zur Bildung eines Steuersignals für ein Element (52, 61, 62) zum Regeln des Durchsatzes des aus dem Autoklaven tretenden Dampfgemisches.

13. Vorrichtung nach einem der Ansprüche 11 oder 12, **dadurch gekennzeichnet, dass** das Regelelement als Regelventil (52, 61, 62) ausgebildet ist und in einer den Kondensator (50) mit einer Vakuumanlage (60) verbindenden und Inertgas führenden Leitung und/oder in einem Kühlwasserrücklauf des Kondensators (50) angeordnet ist und/oder ein Einlassventil (62) für von aussen zuführbares Inertgas aufweist.
